# EUROPÄISCHE PATENTANMELDUNG

(11) **EP 1 415 553 A1**
(43) Veröffentlichungstag der Anmeldung: **06.05.2004**
(21) Anmeldenummer: 02024259.0
(22) Anmeldetag: 31.10.2002
(51) Int. Cl.: A24C 5/31, F16P 3/10

(54) **Verriegelung von Verschutzungen**

(71) Anmelder: Hauni Maschinenbau AG, 21033 Hamburg (DE)
(72) Erfinder: Lotter, Heinz, D-21521 Aumühle (DE); Glogasa, Joachim,, D-21502 Geesthacht (DE)
(74) Vertreter: Seemann, Ralph, Dr. Dipl.-Phys.

(57) **Zusammenfassung**

Die Erfindung betrifft ein Verfahren zum Betrieb einer Verriegelungseinrichtung einer Maschine der tabakverarbeitenden Industrie (1) für eine Verschutzung (11, 12) der Maschine (1) mit den Verfahrensschritten:
- Feststellen des Schließzustandes der Verschutzung (11, 12),
- Betätigen der Verriegelungseinrichtung (10) der Verschutzung (11, 12),
- Feststellen der Verriegelungsposition der Verriegelungseinrichtung (10),
- Freigabe zur Inbetriebnahme der Maschine (1) der tabakverarbeitenden Industrie (1),
wobei der Schließzustand der Verschutzung (11, 12) und/oder die Verriegelungsposition mittels wenigstens eines Sensors (15.1, 15.2; 16) festgestellt werden.

Die Erfindung betrifft ferner eine Verriegelungseinrichtung einer Maschine der tabakverarbeitenden Industrie für eine Verschutzung der Maschine, eine Verwendung einer Verriegelungseinrichtung sowie eine Maschine der tabakverarbeitenden Industrie mit einer Verriegelungseinrichtung.

## Beschreibung

Die Erfindung betrifft ein Verfahren zum Betrieb einer Verriegelungseinrichtung einer Maschine der tabakverarbeitenden Industrie für eine Verschutzung der Maschine sowie eine Verriegelungseinrichtung einer Maschine der tabakverarbeitenden Industrie für eine Verschutzung der Maschine. Darüber hinaus betrifft die Erfindung eine Verwendung eine Verriegelungseinrichtung und eine Maschine der tabakverarbeitenden Industrie.

Sicherheitseinrichtungen wie z.B. Schutztüren und Hauben gehören zum ordnungsgemäßen Ausrüstungsstand einer Maschine der tabakverarbeitenden Industrie. Diese Verschutzungen schützen das Bedienpersonal an gefährlichen Maschinenbereichen. Alle Verschutzungen müssen geschlossen sein, damit die Maschine gestartet werden kann. Sicherheitsschalter überwachen alle sicherheitsrelevanten Verschutzungen. Das Öffnen einer gesicherten Verschutzung stoppt die Maschine und erzeugt eine Störungsmeldung. Unter dem Begriff "Verschutzung" werden insbesondere Türen, Klappen, Abdeckungen und Hauben verstanden, die Personen vor gefährlichen Bereichen eine Maschine schützen.

An die Verriegelung von Verschutzungen werden bei Maschine der tabakverarbeitenden Industrie z.B. Filterherstellungsmaschinen hohe Anforderungen an die Sicherheit und Zuverlässigkeit der Verriegelung gestellt. Die Verschutzungen werden mit Hilfe von elektrischen Schaltern zugehalten, wobei die Schalter eine genaue und definierte Position an der Maschine erfordern, um verriegeln zu können. Durch ständiges Öffnen und Schließen der Verschutzungen ändert sich die Position der Schalter, so daß es zu Funktionsbeeinträchtigungen und Fehlermeldungen bzw. Störungen kommt. Wenn ferner die Hauben und Türen mit einer größeren Kraft als notwendig geschlossen werden, kann die Position der Schalter noch weiter verstellt werden mit der Folge, daß der Schalter beschädigt wird und ausgetauscht werden muß.

Ausgehend von diesem Stand der Technik ist es Aufgabe der vorliegenden Erfindung, die Verriegelung von Verschutzungen an Maschinen der tabakverarbeitenden Industrie derart zu verbessern, daß dauerhaft die Funktionssicherheit von Verriegelungen von Verschutzungen erhöht wird und die Handhabung vereinfacht wird, wobei der Aufwand möglichst gering und kostengünstig sein soll.

Gelöst wird diese Aufgabe mittels eines Verfahrens zum Betrieb einer Verriegelungseinrichtung einer Maschine der tabakverarbeitenden Industrie für eine Verschutzung der Maschine mit den Verfahrensschritten:
- Feststellen des Schließzustandes der Verschutzung,
- Betätigen der Verriegelungseinrichtung der Verschutzung,
- Feststellen der Verriegelungsposition der Verriegelungseinrichtung und
- Freigabe zur Inbetriebnahme der Maschine der tabakverarbeitenden Industrie,
wobei der Schließzustand der Verschutzung und/oder die Verriegelungsposition der Verriegelungseinrichtung mittels wenigstens eines Sensors festgestellt werden.

Durch das automatische Ermitteln des Schließzustandes und/oder der Verriegelung wird die Funktionssicherheit erhöht. Durch das Erkennen einer Endstellung beim Schließen der Verschutzung und/oder bei Verriegeln der Verschutzung ist es nicht mehr notwendig, daß das Bedienungspersonal die Türen oder Hauben von Hand betätigt, d.h. schließt und/oder verriegelt. Darüber hinaus entfällt beispielsweise das visuelle Erkennen und die Prüfung, ob die Verschutzung verriegelt ist. Bevor die Maschine der tabakverarbeitenden Industrie zur Produktion in Betrieb genommen wird und das Freigabesignal erhält, wird ermittelt, ob die Sicherheitsverschutzung geschlossen ist und sich in einer Position befindet, in der sie verriegelt werden kann. Anschließend wird bei korrekter Position der Verschutzung die Verriegelungseinrichtung aktiviert und die Verschutzung verriegelt. Ehe ein Start der Maschine erfolgt und die Produktion von Rauchartikeln aufgenommen wird, wird noch überprüft, ob eine korrekte Verriegelung der Verschutzung stattgefunden hat.

Vorteilhaft ist es, wenn der Schließzustand und die Verriegelungsposition jeweils mittels wenigstens eines Sensors festgestellt werden, so daß unabhängig voneinander ermittelt wird, ob die Verschutzung geschlossen ist und ob die Verschutzung bei korrekter Schließstellung verriegelt ist.

Bevorzugterweise werden der Schließzustand der Verschutzung und/oder die Verriegelungsposition berührungslos erfaßt. Hierdurch wird eine hohe Funktionssicherheit gewährleistet, wobei der konstruktive Aufwand insgesamt gering gehalten werden kann.

Die Aufgabe der Erfindung wird ferner bei einer Verriegelungseinrichtung einer Maschine der tabakverarbeitenden Industrie für eine Verschutzung der Maschine dadurch gelöst, daß wenigstens ein Sensor zum Feststellen des Schließzustandes der Verschutzung und/oder zum Feststellen der Verriegelungsposition der Verriegelungseinrichtung vorgesehen ist. Durch den Erfindungsgegenstand ist es nicht mehr notwendig, daß das Bedienungspersonal das Schließen und/oder Verriegeln einer Sicherheitsverschutzung überwacht, so daß sich eine vereinfachte Handhabung bezüglich der Sicherheitsvorkehrungen ergibt.

Insbesondere sind wenigstens ein Sensor zum Feststellen des Schließzustandes und wenigstens ein Sensor zum Feststellen der Verriegelungsposition vorgesehen, so daß die Ermittlung der jeweiligen Position unabhängig voneinander und automatisch erfolgt.

Gemäß einer bevorzugten Weiterbildung ist vorgesehen, daß der Sensor zum berührungslosen Feststellen des Schließzustandes und/oder zum berührungslosen Feststellen der Verriegelungsposition ausgebildet ist.

Vorteilhaft ist es ferner, wenn die Verriegelungseinrichtung wenigstens ein Verriegelungsglied und ein Betätigungsorgan für das Verriegelungsglied aufweist, so daß die Verschutzung mit einer hohen Riegelkraft verschlossen bzw. gesperrt wird.

Insbesondere ist das Betätigungsorgan als Druckluftzylinder ausgebildet. Die Handhabung von Druckluftzylindern ist einfach und erfordert geringen konstruktiven Aufwand.

Eine weitere Lösung der Erfindung besteht in der Verwendung einer Verriegelungseinrichtung, wie sie voranstehend beschrieben ist, in einer Maschine der tabakverarbeitenden Industrie.

Des weiteren wird die Aufgabe gelöst durch eine Maschine der tabakverarbeitenden Industrie mit einer voranstehend beschriebenen, erfindungsgemäßen Verriegelungseinrichtung.

Unter Maschinen der tabakverarbeitenden Industrie werden insbesondere Strangmaschinen für Filter bzw. Zigaretten sowie Herstellungsmaschinen für Raucherartikel und Verpackungsmaschinen für Artikel der tabakverarbeitenden Industrie verstanden.

Die Erfindung wird nachfolgend anhand eines Ausführungsbeispiels unter Bezugnahme auf die nachfolgende schematische Zeichnung ohne Beschränkung des allgemeinen Erfindungsgedankens exemplarisch beschrieben. Es zeigt:

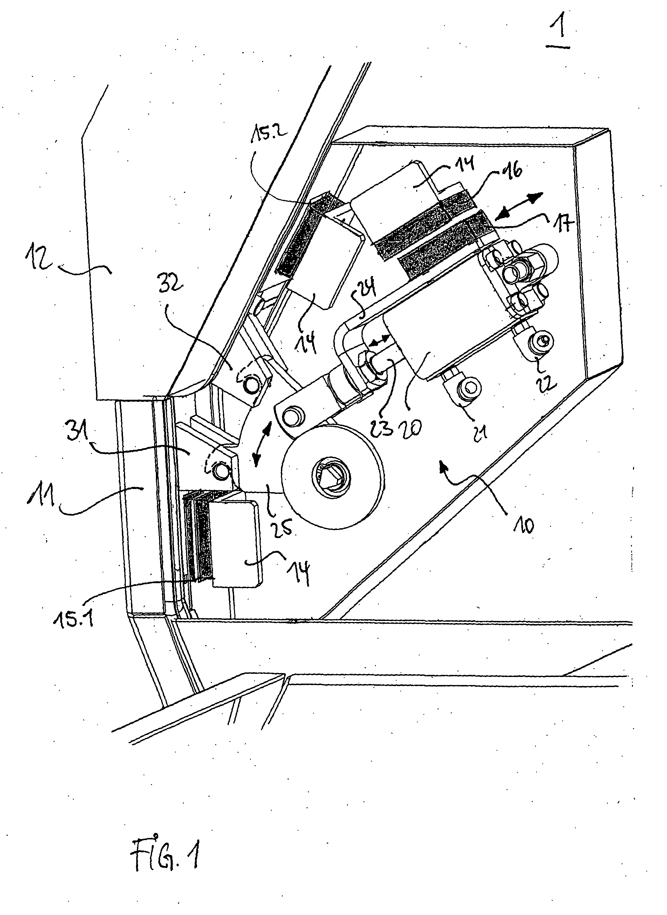

- Fig. 1: eine perspektivischen Detailansicht einer Verschutzung einer Maschine der tabakverarbeitenden Industrie im Ausschnitt.

In Fig. 1 ist ein Ausschnitt einer Filterstabherstellungsmaschine 1 in einer perspektivischen Darstellung im Ausschnitt dargestellt. Eine derartige Filterstabherstellungsmaschine 1 ist beispielsweise unter der Bezeichnung "KDF" der Anmelderin bekannt.

Die Filterstabherstellungsmaschine 1 verfügt über eine Verriegelungseinrichtung 10, mittels der eine schwenkbare Tür 11 und eine Haube 12 verriegelt werden. Zur Verriegelung der Tür 11 verfügt die Tür 11 über eine Halterung 31. Die Haube 12 weist eine Halterung 32 zur Verriegelung auf.

In der perspektivischen Darstellung wurde auf eine seitliche Wand aus Gründen der besseren Darstellbarkeit verzichtet, die seitlich die Verriegelungseinrichtung 10 sowie die Tür 11 und die Haube 12 begrenzt. An der nicht dargestellten seitlichen Wand sind Halterungen 14 angeordnet, die mit Näherungssensoren versehen sind. Mittels des Näherungssensors 15.1 wird festgestellt, ob die Tür 11 an der Maschine 1 anliegt. Darüber hinaus wird gleichzeitig anhand des Näherungssensors 15.2 festgestellt, ob die Haube 12 sich ebenfalls in einer Schließposition befindet, so daß sowohl die Tür 11 als auch die Haube 12 mittels der Verriegelungseinrichtung 10 verriegelt werden.

Zur Verriegelung der Tür 11 und der Haube 12 wird ein Verriegelungsglied 25 betätigt, das in die Halterung 31 der Tür 11 und in die Halterung 32 der Haube 12 gleichzeitig eingreift. Das Verriegelungsglied 25 wird mittels einer Druckluftzylindereinheit 20 in die Verriegelungsposition gedreht. Die Druckluftzylindereinheit 20 verfügt über einen Anschluß 21 und einen Anschluß 22, über die die Druckluftzylindereinheit 20 mit Druckluft versorgt wird. Ferner verfügt die Druckluftzylindereinheit 20 über einen bewegbaren Zylinder 23, an dem ein Arm 24 angebracht ist. Am Ende des Arms 24 ist ein Näherungsglied 17 angeordnet, das parallel und gleichzeitig mit dem Zylinder 23 bewegt wird.

Bei Verriegelung der Tür 11 und der Haube 12 wird das Näherungsglied 17 in den Meßbereich bzw. Erfassungsbereich des oberhalb des Arms 24 angeordneten Näherungssensors 16 bewegt, so daß mittels des Sensors 16 und des Gliedes 17 das Erreichen der korrekten Endlage, d.h. die Verriegelungsposition des Verriegelungsglieds 25 festgestellt wird. Erst nach Erreichen dieser Verriegelungsposition wird ein Freigabesignal zur Inbetriebnahme der Maschine 1 erzeugt.

Bei der Verriegelung der Maschine 1 werden berührungslos die Schließstellung der Tür 11 und der Haube 12 gleichzeitig erfaßt, so daß kein mechanischer Druck auf die Sensoren 15.1, 15.2; 16 ausgeübt wird. Nur wenn alle Verschutzungen der Maschine 1 geschlossen sind, kann eine Verriegelung der Verschutzungen stattfinden. Wenn alle Verschutzungen verriegelt sind, kann die Maschine 1 gestartet werden.

### Bezugszeichenliste

- 1: Maschine (Filterstabherstellungsmaschine)
- 10: Verriegelungseinrichtung
- 11: Tür
- 12: Haube
- 14: Halterung
- 15.1: Näherungssensor
- 15.2: Näherungssensor
- 16: Näherungssensor
- 17: Näherungsglied
- 20: Druckluftzylindereinheit
- 21: Anschluß
- 22: Anschluß
- 23: Zylinder
- 24: Arm
- 25: Verriegelungsglied
- 31: Halterung
- 32: Halterung

## Patentansprüche

1. Verfahren zum Betrieb einer Verriegelungseinrichtung (10) einer Maschine der tabakverarbeitenden Industrie (1) für eine Verschutzung (11, 12) der Maschine (1) mit den Verfahrensschritten:
- Feststellen des Schließzustandes der Verschutzung (11, 12),
- Betätigen der Verriegelungseinrichtung (10) der Verschutzung (11, 12),
- Feststellen der Verriegelungsposition der Verriegelungseinrichtung (10) und
- Freigabe zur Inbetriebnahme der Maschine der tabakverarbeitenden Industrie (1),
wobei der Schließzustand der Verschutzung (11, 12) und/oder die Verriegelungsposition mittels wenigstens eines Sensors (15.1, 15.2; 16) festgestellt werden.

2. Verfahren nach Anspruch 1, **dadurch gekennzeichnet, daß** der Schließzustand und die Verriegelungsposition jeweils mittels wenigstens eines Sensors (15.1, 15.2; 16) festgestellt werden.

3. Verfahren nach Anspruch 1 oder 2, **dadurch gekennzeichnet, daß** der Schließzustand der Verschutzung (11, 12) und/oder die Verriegelungsposition berührungslos erfaßt werden.

4. Verriegelungseinrichtung (10) einer Maschine der tabakverarbeitenden Industrie (1) für eine Verschutzung (11, 12) der Maschine (1), **dadurch gekennzeichnet, daß** wenigstens ein Sensor (15.1, 15.2; 16) zum Feststellen des Schließzustandes der Verschutzung (11, 12) und/oder zum Feststellen der Verriegelungsposition der Verriegelungseinrichtung (10) vorgesehen ist.

5. Verriegelungseinrichtung (10) nach Anspruch 4, **dadurch gekennzeichnet, daß** wenigstens ein Sensor (15.1, 15.2) zum Feststellen des Schließzustandes und/oder wenigstens ein Sensor (16) zum Feststellen der Verriegelungsposition vorgesehen sind.

6. Verriegelungseinrichtung (10) nach Anspruch 4 oder 5, **dadurch gekennzeichnet, daß** der Sensor (15.1, 15.2; 16) zum berührungslosen Feststellen des Schließzustandes und/oder zum berührungslosen Feststellen der Verriegelungsposition ausgebildet ist.

7. Verriegelungseinrichtung (10) nach einem oder mehreren der Ansprüche 4 bis 6, **dadurch gekennzeichnet, daß** die Verriegelungseinrichtung (10) wenigstens ein Verriegelungsglied (25) und ein Betätigungsorgan (20) für das Verriegelungsglied (25) aufweist.

8. Verriegelungseinrichtung (10) nach Anspruch 7, **dadurch gekennzeichnet, daß** das Betätigungsorgan (20) als Druckluftzylinder (20) ausgebildet ist.

9. Verwendung einer Verriegelungseinrichtung (10) nach einem oder mehreren der Ansprüche 4 bis 8 in einer Maschine der tabakverarbeitenden Industrie (1).

10. Maschine der tabakverarbeitenden Industrie (1) mit einer Verriegelungseinrichtung (10) nach einem oder mehreren der Ansprüche 4 bis 8.
